# EUROPÄISCHE PATENTSCHRIFT

(11) **EP 0 707 253 B1**
(45) Veröffentlichungstag und Bekanntmachung des Hinweises auf die Patenterteilung: **24.05.2000**
(21) Anmeldenummer: 95115017.6
(22) Anmeldetag: 24.09.1995
(51) Int. Cl.: G05B 19/418

(54) **Verarbeitungssystem und Verarbeitungsverfahren**
Manufacturing system and method
Système et méthode de fabrication

(30) Priorität: 10.10.1994 CH 304294
(43) Veröffentlichungstag der Anmeldung: 17.04.1996
(73) Patentinhaber: Ferag AG, 8340 Hinwil (CH)
(72) Erfinder: Mäder, Carl C., CH-8340 Hinwil (CH)
(74) Vertreter: Frei, Alexandra Sarah

(56) Entgegenhaltungen:
- EP-A- 0 552 549
- DE-U- 9 407 434
- ELEKTRONIK, Bd. 43, Nr. 7, 5.April 1994 MUNCHEN DE, Seiten 74-82, XP 000443102 A. GEH 'Identifikationssystem: Das Plus für SPS'

## Beschreibung

Die Erfindung betrifft ein Verarbeitungssystem, mit dem aus einem oder mehreren Edukten (im Sinne von educere = herausführen aus einem anderen Verarbeitungssystem in das eigene) über ein oder mehrere Zwischenprodukte ein oder mehrere Produkte hergestellt werden in teils kontinuierlicher, teils nicht kontinuierlicher Weise. Die Verarbeitung soll dabei im weitesten Sinne sowohl als die Edukte verändernder Prozess (Herstellung, Bearbeitung etc.) als auch als die Edukte umordnender Prozess (Zusammenstellen, Kommissionieren, Sortieren etc.) verstanden werden. Insbesondere zur Abgrenzung des Verarbeitungssystems gegenüber anderen derartigen Systemen, zur Verbindung der kontinuierlichen Teile und der nicht kontinuierlichen Teile der Verarbeitung sowie für Kontrollzwecke innerhalb des Systems und an seinen Schnittstellen mit anderen Systemen ist dem Verarbeitungssystem erfindungsgemäss eine Identifikationsstruktur zugeordnet. Das Verarbeitungssystem bildet zusammen mit der ihm zugeordneten Identifikationsstruktur eine von örtlichen Gegebenheiten unabhängige, virtuelle Ordnungsstruktur mit erweiterten Möglichkeiten.

Für die Durchführung eines Verarbeitungsprozesses, in dem aus mindestens einem Edukt (gegebenenfalls einem Erzeugnis aus einem anderen Verarbeitungsprozess) über mindestens ein Zwischenprodukt mindestens ein (End)Produkt hergestellt wird, sind mindestens zwei aktive Verarbeitungselemente und gegebenenfalls eine Mehrzahl von aktiven Transportelementen notwendig.

Verläuft ein derartiger Verarbeitungsprozess durchgehend kontinuierlich, das heisst, wird beispielsweise das Edukt als Eduktstrom aus einem anderen Verarbeitungsprozess zum ersten Verarbeitungselement im eigenen Verarbeitungsprozess zugeführt, dann als Zwischenproduktstrom vom ersten zum zweiten Bearbeitungselement und als Produktstrom vom zweiten Bearbeitungselement aus dem Verarbeitungsprozess weggeführt (gegebenenfalls in einen anderen Verarbeitungsprozess) so kann der eigene Verarbeitungsprozess von einem Prozessrechner verhältnismässig einfach gesteuert werden, indem alle aktiven Elemente (Verarbeitungs- und Transportelemente) entsprechend angesteuert werden. Die Kontrolle der entstehenden Produkte und der aktiven Elemente eines derartigen Prozesses wird üblicherweise mittels Sensorikelementen realisiert, die die Aktivität der aktiven Elemente und/oder die Qualität von Edukt/Produkt messend erfassen und an den Prozessrechner oder an diesem untergeordnete Steuerungen weitergibt.

Da die Ordnung der aus den Edukten über Zwischenprodukte entstehenden Produkte (Edukt/Produkt) in einem derartigen, rein kontinuierlichen Prozess zu jedem Zeitpunkt durch die Verarbeitungssteuerung in einer mehr oder weniger starren Abfolge vorgegeben ist, sind Edukt/Produkt-Elemente durch ihre prozessgesteuerte zeitliche und örtliche Aufeinanderfolge hinreichend "identifiziert". Auch die aktiven Verarbeitungs- und Transportelemente sind durch ihre Funktion und insbesondere durch ihren funktionellen Standort im Verarbeitungsprozess hinreichend "identifiziert".

Für Verarbeitungsprozesse hingegen, die nicht in starrer Abfolge kontinuierlich verlaufen, in denen also eine durch die Kontinuität der Verarbeitung gegebene, starre Ordnung aufgebrochen, aufgelöst bzw. partiell aufgehoben wird, beispielsweise durch Zwischenlagerung von Zwischenprodukten oder durch dynamische Verarbeitungswechsel mit funktionellen und/oder örtlichen Verschiebungen von aktiven Verarbeitungselementen, würde eine zentrale Steuerung desselben Zuschnitts sofort bedeutend aufwendiger und sachzwangmässige Implikationen sind unabsehbar. Zur Vermeidung derartiger unkalkulierbarer Implikationen wird üblicherweise einer der folgenden zwei Wege beschritten: entweder wird die prozessbedingte (prozessorientierte) Ordnung funktionell und/oder zeitlich eingeschränkt oder sie wird "eingefroren".

Bei einer Einschränkung der Prozessordnung werden beispielsweise zwischenzulagernde Zwischenprodukte aus der Prozessordnung entlassen und allenfalls als Edukte dem Prozess später wieder zugeführt und es wird nach einem Verarbeitungswechsel eine neue, von der früheren mindestens teilweise unabhängige Prozessordnung erstellt. Dabei müssen zwischengelagerte Zwischenprodukte für ihren Neueintritt in die Ordnung und aktive Verarbeitungselemente bei ihrem Eintritt in eine neue Prozessordnung als die "richtigen" in irgend einer Weise identifiziert werden können.

Für ein "Einfrieren" der Prozessordnung, das eine Ausweitung der Prozessordnung über den kontinuierlichen Prozess hinaus darstellt, werden beispielsweise zwischenzulagernde Zwischenprodukte in einer der vorgegebenen Prozessordnung entsprechenden Ordnung eingelagert, wodurch sich eine Identifikation der Zwischenprodukte nach der Zwischenlagerung an sich erübrigt. Eine derartige, eingefrorene Prozessordnung kann eine rein örtliche Ordnung sein, wobei jedes zwischengelagerte Element durch bspw. einen vorgegebenen Lagerort eindeutig identifiziert ist, oder es kann eine virtuelle Ordnung sein, in der jede zwischengelagerte Edukt/Produkt-Einheit durch eine rechnergesteuerte Korrelation zwischen einem beliebigen Lagerort und im Prozess erhaltener Identität identifiziert ist.

Eine die zu verarbeitenden Produkte betreffende, ähnliche virtuelle Ordnung wird auch aufrechterhalten in den Systemen, die beispielsweise in den Publikationen "Identifikationssystem: Das Plus für jede SPS" von Andreas Geh (Elektronik, Bd. 43, Nr. 7, Seiten 74-82) oder DE-G-9407434 beschrieben sind. Dabei sind die Daten aber nicht zentral gespeichert sondern durchlaufen mit den Produkten das System, das eine Mehrzahl von Verarbeitungsstationen und ein die Verarbeitungsstationen verbindendes, fest installiertes Fördersystem aufweist. Zu verarbeitende Produkte werden anhand der gespeicherten Daten identifiziert und durch die Verarbeitung gesteuert. Die Daten werden gegebenenfalls in Verarbeitungsstationen auch erweitert (Fehlereintragungen, Quittierung von Verarbeitungsschritten). Die Daten und die Mittel zur Erweiterung der Daten erlauben verschiedene Verarbeitungen in demselben System. Sie erlauben keine Trennung von Produkt und Produkteträger während der Verarbeitung und sie erlauben keine Systemveränderungen.

Auch die Publikation EP-A1-0552549 beschreibt ein Verarbeitungssystem mit einer Mehrzahl von Verarbeitungsstationen, in dem die zu verarbeitenden Produkte auf ihrem Weg durch die Verarbeitung von Datenträgern begleitet werden. Während der Verarbeitung werden insbesondere Testresultate auf dem Datenträger gespeichert. Die Daten dienen zu keinem Zeitpunkt der Identifikation der Produkte und aus diesem Grunde stellen sie auch kein ordnendes Mittel dar.

Eine möglichst weit vorangetriebene, zeitliche und örtliche Ausweitung der Prozessordnung zu einer ein Verarbeitungssystem möglichst überspannenden Ordnung wäre im Sinne einer einfachen, aber trotzdem möglichst durchgehenden Automatisierung wohl vorteilhaft. In den meisten Verarbeitungsbereichen aber, die auch nur eine leicht erhöhte Komplexität aufweisen, ist die Ausweitung einer einzigen Prozessordnung aus technischen und organisatorischen Gründen weder möglich noch sinnvoll. Insbesondere wäre sie einer vielfach ebenfalls geforderten, erhöhten Flexibilität hinderlich, denn Flexibilität verlangt variable Grenzen für jede Prozessordnung, sie verlangt Möglichkeiten sinnvoller, die Prozessordnung verändernder, aufteilender und/oder einschränkender Massnahmen.

Erfindungsgemäss wird nun der Wunsch nach einer ein Verarbeitungssystem möglichst überspannenden Ordnung, der Wunsch also, der nur in betreffend Komplexität und Flexibilität beschränkten Systemen durch eine Prozessordnung erfüllt werden kann, dadurch erfüllt, dass dem Verarbeitungssystem eine Identifikationsstruktur zugeordnet wird. Diese Identifikationsstruktur übernimmt zusätzlich zur Prozessordnung oder zu den Prozessordnungen innerhalb des Systems ordnende Funktionen und wird insbesondere wirksam an allen Systemstellen, an denen es nicht oder nur mit einem nicht zu verantwortenden Aufwand möglich wäre, eine Prozessordnung beizubehalten.

Wird nun in einem Verarbeitungssystem zur Herstellung von Produkten aus Edukten, welches System mindestens in Bereichen mit kontinuierlicher Verarbeitung mindestens eine Prozessordnung aufweist, zusätzlich eine auf das System abgestimmte Identifikationsstruktur eingeführt, die sich über das ganze System erstrecken kann, können also die Grenzen der Prozessordnung oder - ordnungen innerhalb des Systems jederzeit variiert werden, denn es kann an Stellen mangelnder "Ordnung" auf die ebenfalls ordnende Funktion der Identifikationsstruktur zurückgegriffen werden. Dies gilt insbesondere an Übergängen von Prozessteilen (bspw. kontinuierliche Verarbeitung) mit einer prozessbedingten Ordnung zu Prozessteilen ohne eine derartige Ordnung (bspw. Zwischenlager, "ungeordnete" Verarbeitung) oder zu einer anderen, prozessbedingten Ordnung. Die Identifikationsstruktur ist eine das Verarbeitungssystem überspannende für ordnende Funktionen ausnützbare Struktur, die an verschiedensten sich zeitlich auch verändernden Stellen des Verarbeitungssystems die ordnende Funktion jederzeit übernehmen kann und die an beliebigen Stellen des Systems auch für Steuer und/oder Kontrollzwecke genützt werden kann. Die dem Verarbeitungssystem zugeordnete Identifikationsstruktur erlaubt es, das System als einheitlich geordneten Corpus fast beliebig zu erweitern auch über den eigentlichen Verarbeitungsprozess hinaus. Die Identifikationsstruktur stellt neben einem zusätzlichen ordnenden System eine Dezentralisierung von Prozessdaten dar, wodurch weitere Möglichkeiten zu deren Nutzung eröffnet werden: beispielsweise beliebige Steuerfunktionen, Kontrollfunktionen, Sicherheitsfunktionen oder Auswertungsfunktionen (Statistik, Fakturierung, Buchhaltung etc.).

Das erfindungsgemässe Verarbeitungssystem mit zugeordneter Identifikationsstruktur soll derart flexibel sein, dass nicht nur der eigentliche Verarbeitungsprozess in weiten Grenzen veränderbar ist, ohne dass die Identifikationsstruktur an sich verändert werden müsste, sondern dass auch indirekt mit der Verarbeitung verbundene Funktionen, wie beispielsweise Unterhalt von Systemelementen, in das Verarbeitungssystem und damit auch in die Identifikationsstruktur miteinbezogen werden können.

Die genannten Aufgaben werden gelöst durch das vorgeschlagene Verarbeitungssystem mit der zugeordneten Identifikationsstruktur wie es in den Patentansprüchen definiert sind.

Die Identifikationsstruktur des erfindungsgemässen Verarbeitungssystems besteht aus Identifikationen, die Systemelementen zugeordnet sind, und aus Fähigkeiten, eigene oder fremde Identifikationen oder Identifikationsteile zu verändern, welche Fähigkeiten ebenfalls Systemelementen zugeordnet sind. Dabei ist die Struktur der Element-Identifikationen und die Zuordnung der Fähigkeiten zur Änderung von Identifikationen an die durch die Verarbeitung und gegebenenfalls durch indirekt mit der Verarbeitung verbundene Systemteile definierte, funktionelle Struktur der Elemente des Systems angepasst. Die Identifikationsstruktur kann annäherungsweise als virtuelles Abbild der Funktionsstruktur des Verarbeitungssystems aufgefasst werden.

Im folgenden wird das erfindungsgemässe Verarbeitungssystem mit zugeordneter Identifikationsstruktur einerseits in mehr allgemeiner Form andererseits am Beispiel der Weiterverarbeitung von Erzeugnissen von Druckmaschinen (z.B. Rotationsmaschinen) zu Zeitschriften, Broschüren, Zeitungen, Büchern etc. beschrieben. Eine solche Weiterverarbeitung ist ein Beispiel eines Verarbeitungsprozesses, von dem neben durchgehender Automation auch eine weitestgehende Flexibilität gefordert wird und der sich aus diesem Grunde für die Anwendung des erfindungsgemässen Systems mit zugeordneter Identifikationsstruktur ganz besonders eignet. Dies soll aber in keiner Weise bedeuten, dass das erfindungsgemässe System mit zugeordneter Identifikationsstruktur sich nur auf diesem Gebiete anwenden lässt.

Ein Verarbeitungssystem zur Herstellung von Produkten aus Edukten, welche Edukte gegebenenfalls aus einem fremden Verarbeitungsprozess herausgeführt und in den eigenen Prozess eingeführt werden und welche Produkte gegebenenfalls aus dem eigenen Verarbeitungsprozess einem weiteren Verarbeitungsprozess zugeführt werden, weist aktive und passive, systemeigene und nicht systemeigene Elemente auf. Aktive Elemente sind Elemente, die in irgend einer Weise auf andere (aktive oder passive) Elemente wirken (Verarbeitungsvorrichtungen, Transportvorrichtungen etc.). Passive Elemente sind Elemente auf die im System nur gewirkt wird, die aber selber auf andere Elemente nicht wirken können (Edukt/Produkt-Elemente, passive Hilfsmittel wie Wickelkerne, Paletten, Behälter etc). Systemeigene Elemente (Verarbeitungsvorrichtungen, Transportvorrichtungen, passive Hilfsmittel etc.) verbleiben im wesentlichen im System, nicht systemeigene Elemente (Edukt/Produkt-Elemente) halten sich nur temporär im System auf Die Summe aller Systemelemente und ihrer Fähigkeiten, auf andere Elemente zu wirken, bilden zusammen eine funktionelle Struktur (Funktionsstruktur), in der die Elemente nach Arten ihrer Fähigkeiten und nach Art der Elemente, auf die sie dank ihrer Fähigkeiten wirken können, geordnet sind.

Die dem Verarbeitungssystem, oder genauer dessen Funktionsstruktur erfindungsgemäss zugeordnete Identifikationsstruktur besteht nun aus bspw. mehrteiligen Identifikationen, die Systemelementen zugeordnet sind, und aus aktiven, ebenfalls Systemelementen zugeordneten Fähigkeiten zur Veränderung eigener oder fremder Identifikationsteile. Dabei sind die Identifikationen derart strukturiert und die Fähigkeiten zur Identifikationsveränderung derart zugeordnet, dass die Identifikationsstruktur der funktionellen Struktur entspricht. Durch die Kombination der an sich vorgegebenen Funktionsstruktur mit der Identifikationsstruktur entsteht ein neues Ordnungssystem, das eine virtuelle Ordnung darstellt.

Während die funktionelle Struktur eines Verarbeitungssystems alle Elemente des Systems ordnet, können Elemente aus der Identifikationsstruktur ausgenommen sein, können Wirkungen, die in der funktionellen Struktur erlaubt sind, in der Identifikationsstruktur untersagt sein, es sind aber in der Identifikationsstruktur keine Wirkungen möglich, die der funktionellen Struktur zuwiderlaufen.

Systemelemente können zusätzlich befähigt sein, Identifikationen anderer Elemente für Kontroll- und/oder Steuerzwecke auszulesen, und Identifikationsträger können zusätzlich mit einer passiven Fähigkeit ausgerüstet sein, um unrechtmässige Veränderungen der eigenen Identifikation bzw. von Teilen davon zu verweigern.

Soll das Verarbeitungssystem mit zugeordneter Identifikationsstruktur bezüglich seiner systemeigenen Elemente variabel sein und sollen systemeigene Elemente auch mit anderen, mit ähnlichen Identifikationsstrukturen ausgestatteten Systemen austauschbar sein, braucht das System einen dem ganzen System zugeordneten, allen in der Identifikationsstruktur enthaltenen Elementen übergeordneten Identifikationscontroller, der gegebenenfalls mit anderen Identifikationscontrollern anderer Systeme kommunizieren kann.

Die Identifikationsteile, die zusammen die Identifikation eines Systemelementes bilden, sind beispielsweise ein dem System zugeordneter Teil (Systemidentifikation), ein individueller Teil (Individuumsidentifikation) und ein dem momentanen Verarbeitungsprozess zugeordneter Teil (Prozessidentifikation), wobei jeder dieser Teile weiter in Unterbereiche aufteilbar ist.

Anhand der unten aufgeführten Figuren sollen nun verschiedene beispielhafte Verarbeitungssysteme mit zugeordneter Identifikationsstruktur und Bestandteile davon im Detail diskutiert werden.
- **Figur 1**: zeigt eine beispielhafte, funktionelle Struktur (Funktionsstruktur) eines Verarbeitungssystems, mit dem Erzeugnisse (Edukte) aus beispielsweise einer Rotationsmaschine zu abnehmerprofilierten und verteilungsroutengerecht verpackten Druckproduktgruppen weiterverarbeitet und systemeigene Elemente einem Unterhalt (Service) unterzogen werden können.
- **Figur 2**: zeigt eine der Funktionsstruktur gemäss Figur 1 zugeordnete Identifikationsstruktur.
- **Figuren 3 bis 6**: zeigen mehrteilige Identifikationen von Elementen des durch Figur 1 und 2 definierten Verarbeitungssystems mit zugeordneter Identifikationsstruktur.
- **Figuren 7 und 8**: zeigen zwei Beispiele von Verarbeitungsprozessen, die als erfindungsgemässe Verarbeitungssysteme konzipiert sein können.

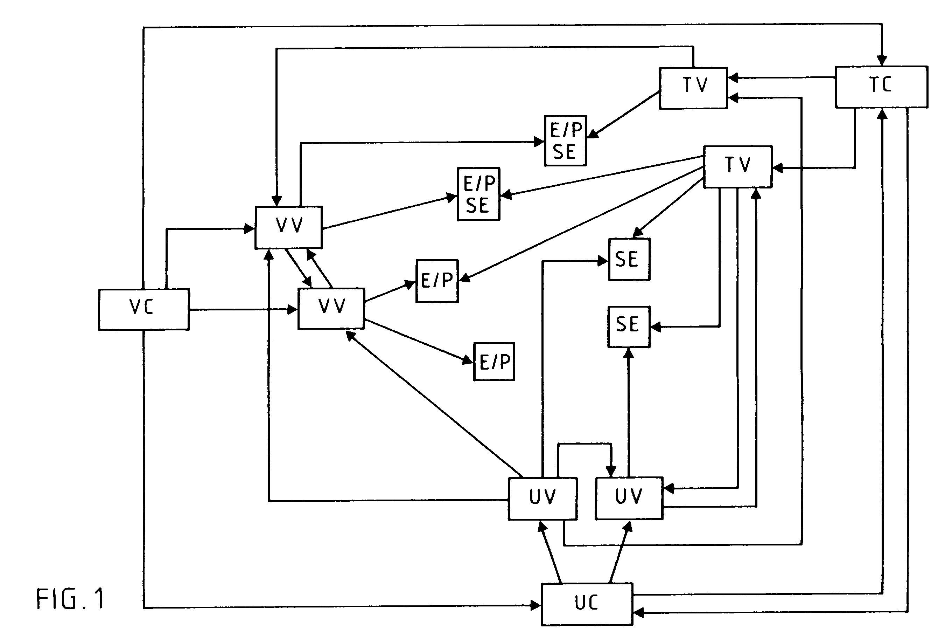

**Figur 1** zeigt schematisch eine funktionelle Struktur, in der die Elemente eines beispielhaften Systems zur Verarbeitung von verschiedenen Erzeugnissen einer oder mehrerer Rotationsmaschinen zu verschiedenen Druckprodukten gemäss ihren Fähigkeiten eingeordnet sind. Die mit den Elementen durchführbare Verarbeitung oder durchführbaren Verarbeitungen verlaufen teilweise kontinuierlich, teilweise nicht kontinuierlich. Insbesondere werden sowohl Edukte (aus den Rotationsmaschinen anfallende Erzeugnisse) als auch Zwischenprodukte teilweise kontinuierlich weiterverarbeitet, teilweise zwischengelagert und später zusammen beispielsweise mit später anfallenden Edukten oder Zwischenprodukten weiter verarbeitet. In das System ist ferner der Unterhalt (Service) der systemeigenen Elemente miteinbezogen. Die in der Figur 1 dargestellte, funktionelle Struktur stellt eine der möglichen Strukturen für das System dar; selbstverständlich wären auch andere funktionelle Strukturen für dasselbe System denkbar.

Die Figur 1 zeigt in anschaulicher Weise Systemelemente als Rechtecke und beispielhafte Wirkungen, die von aktiven Elementen gemäss ihren Fähigkeiten ausgehen und auf andere aktive oder passive Elemente in irgend einer Weise verändernd wirken können, als Pfeile, die vom bezüglich der spezifischen Wirkung vom aktiven zum passiven Element gerichtet sind. Die örtliche Anordnung der Elemente in der Figur 1 ist dabei nicht durch ihre Verarbeitungsfunktion gegeben sondern rein zufällig. Die Funktionsstruktur der Elemente eines Verarbeitungssystems ist nicht eine örtliche sondern eine virtuelle Struktur, die durch die Zahl der im System anwesenden Elemente und durch deren Fähigkeiten aufeinander zu wirken gegeben ist.

Das dargestellte Verarbeitungssystem weist passive Elemente auf, auf die also nur Wirkungspfeile gerichtet sind und von denen keine Wirkungspfeile ausgehen. Solche Elemente sind reine Edukt/Produkt-Elemente E/P, also nicht systemeigene Elemente, wie einzelne in das System übernommene Edukte, Zwischenprodukte oder Produkte oder je eine Mehrzahl davon. Ebenfalls solche Elemente sind passive, systemeigene Elemente SE (Hilfsmittel), wie beispielsweise leere Wickelkerne oder Kassetten, leere Paletten oder leere Behälter oder es sind je eine mit Hilfe eines systemeigenen, passiven Elementes zusammengefasste Mehrzahlen, gleichartiger Edukte, Zwischenprodukte oder Produkte (E/P-SE), wie beispielsweise ein Druckproduktewickel oder ein mit Druckprodukten beladenes Palett bzw. ein Druckprodukte enthaltender Behälter. Auf diese passiven Elemente wirken in verarbeitender oder dislozierender Weise Verarbeitungsvorrichtungen VV, in rein dislozierender Weise wirken mobile Transportvorrichtungen TV und in systemunterhaltender Weise Unterhaltsvorrichtungen UV.

Verarbeitungsvorrichtungen VV wirken auf Edukte, Zwischenprodukte oder Produkte, also auf reine Edukt/Produkt-Elemente (E/P), beispielsweise auf einzelne Edukte oder Zwischenprodukte, wie dies im Bereiche der kontinuierlichen Verarbeitung (z.B. Sammeltrommel, Heftvorrichtung) üblich ist, oder sie wirken auf mit systemeigenen Elementen zusammengefasste Mehrzahlen (E/P-SE) von Edukten, Zwischenprodukten oder Produkten (z.B Wickelstationen, die auf Druckproduktewickel wirken). Transportmittel zur kontinuierlichen Zu- oder Wegführung von Edukt/Produkt-Elementen hin zu oder weg von kontinuierlich arbeitenden Verarbeitungsvorrichtungen sind derart starr an die Verarbeitung gebunden, dass sie ebenfalls als Verarbeitungselemente VV eingestuft sind.

Neben ihrer "verarbeitenden" Aktivität mit Wirkung auf Edukte, Zwischenprodukte oder Produkte können Verarbeitungsvorrichtungen VV auch steuernd aufeinander wirken.

Mobile Transportvorrichtungen TV (z.B. Fahrzeuge mit oder ohne Manipulierwerkzeugen, Laufkräne) wirken dislozierend insbesondere auf Elemente E/P-SE (z.B. Wickel, beladene Paletten, gefüllte Behälter), auf Elemente SE (z.B. Wickelkerne, leere Paletten, leere Behälter) oder E/P (z.B. Pakete von Druckprodukten), können aber auch auf mobile Verarbeitungsvorrichtungen VV (z.B. Anleger) bei Verarbeitungswechseln oder zum Zwecke von Service und Unterhalt sowohl auf mobile Verarbeitungsvorrichtungen VV als auch auf mobile Unterhaltsvorrichtungen UV wirken.

Unterhaltsvorrichtungen UV, die im weitesten Sinne neben stationären und mobilen, Funktionen des Unterhaltes ausführenden Apparaturen auch Unterhaltsmonteure sein können, wirken auf Verarbeitungsvorrichtungen VV, auf Transportvorrichtungen TV, gegebenenfalls auf andere Unterhaltsvorrichtungen UV. Daneben wirken sie aber auch auf passiv am Verarbeitungsvorgang teilnehmende Elemente SE wie Wickelkerne, Paletten, Behälter etc.

Verarbeitungsvorrichtungen VV, Transportvorrichtungen TV und Unterhaltsvorrichtungen UV werden beispielsweise gesteuert durch je ein steuerndes Element, welche steuernden Elemente miteinander kommunizieren, das heisst, ebenfalls aufeinander wirken. Diese steuernden Elemente sind beispielsweise ein Steuerelement VC (Verarbeitungscontroller), das für die Verarbeitung zuständig ist und das direkt an der Verarbeitung beteiligte Verarbeitungsvorrichtungen VV (Bearbeitungsvorrichtungen und Vorrichtungen zum kontinuierlichen Transport zwischen Bearbeitungsvorrichtungen) der momentanen Verarbeitung gemäss steuert, ein Transportcontroller TC, der mobile Transportvorrichtungen TV ansteuert und diesen beispielsweise Ziele, Lasten und Wege zuteilt, und ein Unterhaltscontroller UC, der steuernd auf Unterhaltsvorrichtungen UV wirkt, indem er beispielsweise deren Pensum und Objekte bestimmt.

Verarbeitungs-, Transport- und Unterhaltscontroller VC, TC und UC wirken auch gegenseitig aufeinander, indem beispielsweise der Verarbeitungscontroller VC und der Unterhaltscontroller UC beim Transportcontroller TC Transporte anfordern können, indem der Verarbeitungscontroller VC den Zustand der ihm unterstellten Verarbeitungsvorrichtungen VV kontrolliert und gegebenenfalls beim Unterhaltscontroller UC Unterhaltsaktionen anfordert, was auf die steuernde Tätigkeit des Unterhaltscontrollers verändernd wirkt.

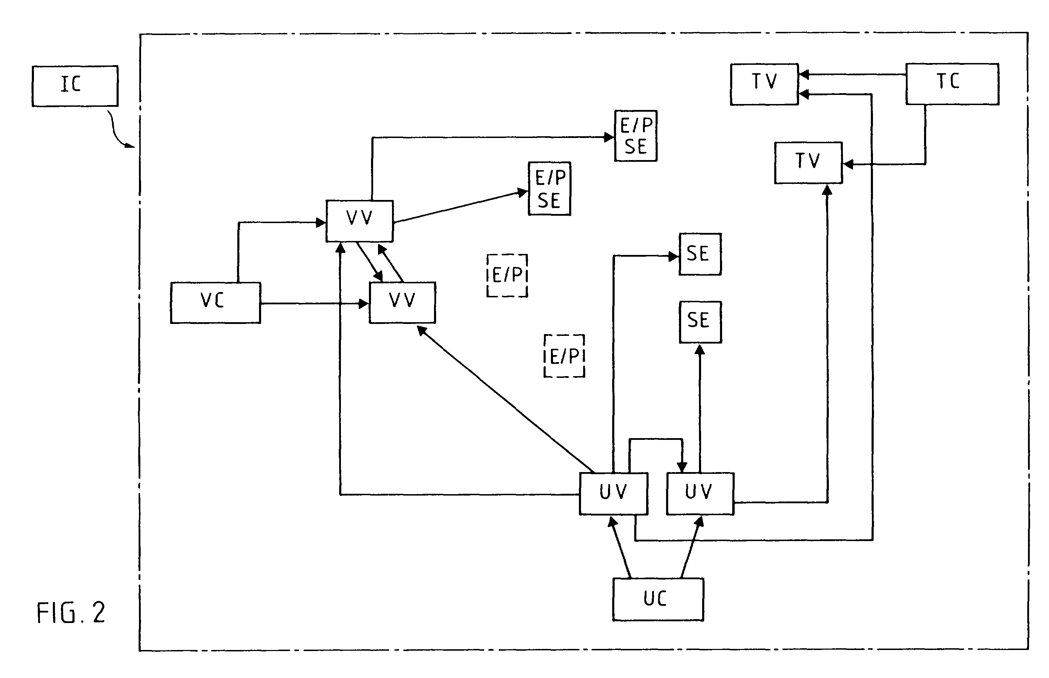

**Figur 2** stellt nun eine beispielhafte Identifikationsstruktur für das durch die funktionelle Struktur gemäss Figur 1 dargestellte Verarbeitungssystem dar. Wie bereits erwähnt besteht die Identifikationsstruktur aus Element-Identifikationen und aus Element-Fähigkeiten zur Veränderung von Element- Identifikationen, während die Funktionsstruktur aus der Verarbeitung im weitesten Sinne dienlichen Elementen besteht und aus deren Fähigkeiten, auf andere Elemente im Sinne einer prozessorientierten Veränderung zu wirken. In der Identifikationsstruktur (Figur 2) sind die Systemelemente an den gleichen Stellen gezeichnet wie in Figur 1. Elemente, die keine Identifikation tragen, sind gestrichelt dargestellt. Als Pfeile dargestellt sind Fähigkeiten zur Veränderung von Identifikationen und zwar wie in der Figur 1 vom "aktiven", mit Mitteln zur Identifikationsveränderung ausgestatteten Element auf das "passive" Element, dessen Identifikation verändert werden kann, gerichtet. Ein Vergleich der beiden Figuren 1 und 2 zeigt, dass die Identifikationsstruktur (Figur 2) ein reduziertes Abbild der funktionellen Struktur (Figur 1) ist, ausser in bezug auf einen Identifikationscontroller IC, der als Element in der funktionellen Struktur fehlt, und der verändernd auf alle Elementidentifikationen wirken kann, was in der Figur 2 symbolisch mit einem Pfeil auf eine alle Elemente umfassende, strichpunktierte Linie dargestellt ist.

Aus der Figur 2 ist ersichtlich, dass die passiven, nicht systemeigenen Elemente E/P keine Identifikation tragen. Dies ist sinnvoll, wenn in dem System reine Edukt/Produkt-Elemente nur in kontinuierlichen Prozessbereichen (mit Prozessordnung) vorkommen, was üblich ist für die Verarbeitung von kleinen Produkten, wie es Druckprodukte üblicherweise sind. In kontinuierlichen Prozessbereichen brauchen die Edukt/Produkte, wie bereits eingangs erläutert, nicht zwingend identifiziert zu werden, da sie durch die Prozessordnung hinreichend identifiziert sind. Sobald sie einen kontinuierlichen Prozessbereich, also gegebenenfalls auch die entsprechende Prozessordnung, verlassen, werden sie mit systemeigenen, passiven Hilfsmitteln (SE) in Mehrzahlen zusammengefasst, wobei die Edukt/Produkt-spezifische Identifikation von diesem Hilfsmittel getragen wird. Das passive, systemeigene Element trägt also im "beladenen" Falle (E/P-SE) eine seine "Last" identifizierende Identifikation, während für das leere Element (SE) diese Last-spezifische Identifikation eine Null-Identifikation ist.

Die oben beschriebene Identifikationsstrategie für Edukt/Produkt-Elemente ist vorteilhaft für die genannte Art von Verarbeitungsprozess, in dem die Identifikation als Teil einer das System überspannenden Identifikationsstruktur von einzelnen Edukten/Produkten zu aufwendig oder wenig sinnvoll ist; sie ist aber nicht zwingend. Ist das zu erzeugende Produkt (passives, nicht systemeigenes Element) grösser und hält sich länger im System auf, wie beispielsweise ein Auto während seiner Herstellung, kann es sinnvoll sein, das Auto selbst, als effektives Edukt/Produkt-Element (E/P) mit einer Identifikation zu versehen, wobei ein Identifikationsträger irgendwo im Prozess am entstehenden Auto angebracht wird und wie ein Laufzettel das Auto begleitet, vorteilhafterweise bis zu seiner Fertigstellung oder sogar weiter.

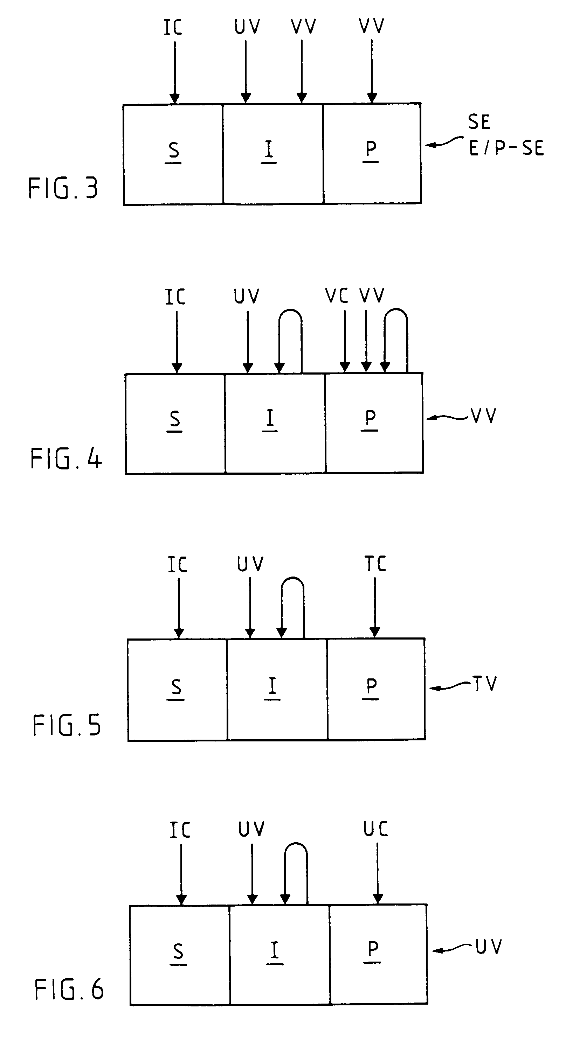

Aus der Figur 2 ist ersichtlich, dass in der Identifikationsstruktur, gleich wie in der funktionellen Struktur die passiven Elemente SE und E/P-SE in keiner Weise Identifikations-verändernd wirken können (keine Pfeile von ihnen ausgehend), dass die Verarbeitungs-, Transport- und Unterhaltsvorrichtungen (VV, TV, UV) die Identifikationen von passiven Elementen verändern können und auch Identifikations-verändernd gegenseitig aufeinander wirken können und dass Verarbeitungs-, Transport- und Unterhaltscontroller (VC, TC und UC) die Identifikationen der ihnen unterstellten Vorrichtungen verändern können. Auf die Beschränkungen der Identifikations-verändernden Wirkungen gegenüber den funktionellen Wirkungen soll im Zusammenhang mit den Figuren 3 bis 6 noch im Detail eingegangen werden.

Der Identifikationscontroller IC hat in der Funktionsstruktur keine Bedeutung (er ist in der Figur 1 auch nicht dargestellt), da er hinsichtlich der Verarbeitung (im weitesten Sinne) keine Aktivität entwickeln kann. In der Identifikationsstruktur ist ihm die Aufgabe zugeordnet, auf den das System betreffenden Teil der Identifikationen der Systemelemente verändernd zu wirken, was insbesondere bei der Erschaffung eines Systems, bei der Aufnahme neuer Elemente ins System und beim Übertritt von Elementen von einem System in ein anderes notwendig wird. Übertritte von einem System zu einem anderen sind insbesondere üblich für mobile, passive Elemente wie beispielsweise Wickelkerne, die mit den aufgewickelten Produkten von beispielsweise einer Druckerei an eine weitere Druckerei geliefert werden.

Wie bereits weiter oben erwähnt, ist das Beispiel eines Verarbeitungssystems, wie es den Figuren 1 und 2 zugrunde liegt, also eines Systems zur Weiterverarbeitung der Erzeugnisse von Druckmaschinen nicht das einzige System, das durch Zuordnung einer Identifikationsstruktur zu einem erfindungsgemässen Verarbeitungssystem werden kann. Beispielsweise ist auch ein System zur reinen Kommissionierung einer Vielzahl von verschiedenen Gegenständen, also die Herstellung von vorgegebenen Sortimenten, ein äusserst geeignetes System. Dabei werden vorteilhafterweise die Behälter, in denen die Sortimente erstellt werden, als Identifikationsträger ausgerüstet und beispielsweise eine zentrale Steuerung und/oder die Zuführungen an denen Gegenstände zu den entstehenden Sortimenten zugeführt werden, mit Mitteln zur Veränderung der Behälteridentifikationen auszurüsten.

Ferner ist es, wie bereits weiter oben erwähnt, möglich, das Verarbeitungssystem gemäss Figuren 1 und 2 beliebig zu erweitern. So kann beispielsweise der Bereich der Druckmaschinen und der Bereich der Zuführung des unbedruckten Papiers zu den Druckmaschinen jederzeit in das Verarbeitungssystem miteinbezogen, das heisst die Identifikationsstruktur darauf ausgedehnt werden, wobei die Druckmaschinen einen Bereich mit kontinuierlicher, aber wechselnder Verarbeitung darstellen und die Papierzufuhr einen Bereich mit nicht kontinuierlicher Verarbeitung darstellen.

**Figuren 3 bis 6** zeigen mehrteilige Identifikationen, wie sie Elemente einer funktionellen Struktur gemäss Figur 1 und einer Identifikationsstruktur gemäss Figur 2 beispielsweise zugeordnet sein können. Die Gesamtheit der Identifikationsteile, die in der Figur als einfache Reihe von "black boxes" dargestellt ist, ist vorteilhafterweise als digitaler Datensatz in einem elektronischen Speicher gespeichert, wobei der Speicher insbesondere bei mobilen Elementen am Element selber vorzusehen ist.

**Figur 3** zeigt die Identifikation eines passiven Elementes SE oder E/P-SE. Sie besteht aus drei Teilidentifikationen, einer Systemidentifikation S, einer Individuumsidentifikation I und einer Prozessidentifikation P. Identifikations-verändernde Wirkungen sind als auf die Identifikationsteile S, I, P gerichtete Pfeile dargestellt, die mit der Bezeichnung des für die Veränderung befähigten Elementes bezeichnet sind.

Die Systemidentifikation S identifiziert das Element als Element einer bestimmten Elementenart (z.B. als Wickelkern), das zu einem bestimmten System gehört. Sie kann nur vom Identifikationscontroller IC verändert werden, was notwendig wird, wenn das Element in das System aufgenommen wird oder das System verlässt und in ein anderes System mit ähnlicher Identifikationsstruktur aufgenommen werden soll (beispielsweise als Wickelkern eines Wickels von Zwischenprodukten, die in einem anderen Verarbeitungssystem weiterverarbeitet werden sollen). Die Systemidentifikation dient auch dazu, eine Veränderung der Identifikation eines Elementes durch ein Element, das nicht zum selben System gehört oder das keinen Zugriff hat auf Identifikationen dieser Art von Element, zu verhindern.

Die Identifikation des passiven Elementes umfasst weiter eine Individuumsidentifikation I, die seinen individuellen Zustand, insbesondere seinen Überholungszustand (z.B. für einen Wickelkern: Wickelzyklen seit der letzten Überholung) identifiziert. Ferner kann die Individuumsidentifikation beispielsweise einen Wickelkern als "Nummer Zwölf" Wickelkern identifizieren, womit er beispielsweise einem bestimmten Verarbeitungsbereich und/oder einem bestimmten Unterhaltssektor zugeordnet ist. Die Individuumsidentifikation I ist veränderbar durch Verarbeitungsvorrichtungen VV (beispielsweise durch eine Wickelstation, die die Zahl der vom Wickelkern erlebten Wickelzyklen erhöht) und durch Unterhaltsvorrichtungen UV (beispielsweise Unterhaltsmonteur, der das Wickelband ersetzt hat und die Zahl der erlebten Zyklen zurück auf Null setzt).

Die Identifikation des passiven Elementes enthält weiter eine Prozessidentifikation P, die sich auf ein momentan mit dem Element verbundenes Edukt/Produkt-Element bezieht. Für einen Wickelkern ist dies beispielsweise die Art der aufgewickelten Produkte und deren Zahl. Dieser Identifikationsteil kann durch Verarbeitungsvorrichtungen VV (z.B. Wickelstation) verändert werden. Diese Identifikation kann insbesondere auch von Verarbeitungsvorrichtungen gelesen und zu eigenen Steuer- und/oder Kontrollzwecken verwendet werden, wodurch die Prozesssteuerung mindestens teilweise dezentralisiert werden kann.

**Figur 4** stellt die mehrteilige Identifikation einer Verarbeitungsvorrichtung VV dar. Die Systemidentifikation S und die Individuumsidentifikation I haben dieselbe Funktion wie bei einem passiven Element (Figur 3), wobei die Individuumsidentifikation I auch durch das Element selbst verändert werden kann (symbolisiert durch einen vom Element ausgehenden und darauf zurückweisenden Pfeil), beispielsweise zur Erhöhung der Zahl der erlebten Zyklen. Die Prozessidentifikation P eines Verarbeitungselementes VV identifiziert die Funktion des Elementes in einem gerade ablaufenden oder bevorstehenden Verarbeitungsprozess. Sie enthält beispielsweise Details der Funktion (z.B. Auf- oder Abwickelfunktion einer ambivalent verwendbaren Wickelstation) und Daten der zu verarbeitenden Edukt/Produkt-Elemente oder verschiedene Steuerdaten die je nach eingelesener Identifikation des Edukt/Produkts zur Anwendung kommen.

Figuren 5 und 6 stellen die mehrteiligen Identifikationen einer Transportvorrichtung TV und einer Unterhaltsvorrichtung UV dar, auf die die Beschreibungen der Identifikationen der passiven Elemente (Figur 3) und der Verarbeitungselemente (Figur 4) entsprechend anwendbar sind.

Wie aus der Figur 2 ersichtlich ist, ist in der beschriebenen Identifikationsstuktur den mobilen Transportvorrichtungen TV keine Identifikations-verändernde Fähigkeit zugeordnet. Dies wäre aber ohne weiteres möglich, wenn in den mehrteiligen Identifikationen von mindestens den mobilen Systemelementen ein weiterer Identifikationsteil, eine Ortsidentifikation vorgesehen wäre. Eine derartige Ortsidentifikation würde dann von einer Transportvorrichtung derart verändert, dass sie mit dem Ziel der Transportvorrichtung überschrieben würde und jederzeit den momentanen Standort des Elementes identifizieren würde. Ein derartiger Identifikationsteil könnte zum "Suchen" von Elementen ausgenützt werden.

Zur Realisierung der beschriebenen Identifikationsstruktur sind, wie bereits erwähnt, als Identifikationsträger elektonische Speicher anwendbar. Beispielsweise ist von der Firma Mikron GmbH, Graz unter dem Namen MIDAT (Patentanmeldung AT 1737/90, angemeldet 23.8.90) ein Chip im Handel erhältlich, der neben den für die beschriebene Anwendung notwendigen Speicherkapazitäten auch Sicherheitsfunktionen aufweist, durch die er vor unbefugtem Beschreiben und Auslesen geschützt werden kann. Für mobile, passive Systemelemente (z.B. Wickelkerne, Paletten, Behälter) wird ein derartiger Chip vorteilhafterweise angewendet in Kooperation mit einem Lese/Schreibgerät, das einem aktiven Systemelement zugeordnet ist und von dem der Chip via einer Spule neben den notwendigen Daten auch die Energie zur Durchführung der Sicherheitsfunktionen, zur Aussendung der eigenen Identifikationsdaten und zur gegebenenfalls notwendigen Speicherüberschreibung erhält. Damit ist eine berührungslose Datenübertragung und Identifikations-Veränderung möglich. Ein derartiger Identifikationsträger eignet sich auch für mobile aktive Elemente, denen keine Identifikations-verändernden Fähigkeiten zugeordnet sind (beispielsweise mobile Transportvorrichtungen), wobei die Reichweite der berührungslosen Übertragung durch einen entsprechenden Booster erweitert werden kann. Für aktive Systemelemente, denen in Form von Schreib/Lesegeräten Mittel zur Identifikations-Veränderung zugeordnet sind, können ihre Identifikation als Softwareteil oder ebenfalls als separaten Chip tragen.

Eine Prozess- und Indentifikations-orientierte Interaktion zwischen einem aktiven und einem passiven Element läuft beispielsweise in der folgenden Weise ab: die Systemidentifikationen der beiden Elemente werden zur Verifizierung der Elemente miteinander und mit entsprechenden Kompetenzvorschriften (softwaremässig für das Schreib/Lesegerät zugänglich) verglichen; entsprechen die Elemente einer im System vorgesehene Interaktion, werden die Prozessidentifikationen der beiden Elemente miteinander verglichen; entsprechen sie einander, wird die Prozess-orientierte Interaktion freigegeben; nach der Prozess-orientierten Interaktion werden die Prozessidentifikation des passiven Elementes entsprechend der abgelaufenen Prozess-orientierten Interaktion und gegebenenfalls die Individuumsidentifikationen beider Elemente überschrieben.

Für die bereits erwähnten Zusatzfunktionen (Steuerung, Kontrolle, Sicherheit, Auswertung des Prozesses) der Identifikationsstruktur können an beliebigen Stellen des Systems auch reine Lesegeräte vorgesehen werden. Ein Beispiel einer derartigen Sicherheitsfunktion stellt ein Lesegerät dar, das in senkrechter Richtung beweglich an einem über einem Lager von Stapeln liegender Druckproduktewickel beweglichen Laufkran angeordnet ist und das zum Auslesen der Wickelkern- bzw. Wickel-Identifikationen in die Hohlräume der Wickelkerne der aufeinanderliegenden Wickel bewegt wird und die Wickel-Identifikationen ausliest, wenn beispielsweise die entsprechenden Daten in einem Leitrechner verloren gegangen sind. Ein Beispiel einer Auswertfunktion stellt beispielsweise ein Lesegerät an einem Systemausgang dar, mit dem die Identifikationen aus dem System auszuführender Edukt/Produkt-Elemente zuhanden einer Fakturierung ausgelesen werden. Lesegeräte an beliebigen Systemstellen können Identifikationsdaten, insbesondere Edukt/Produkt-Elemente betreffende Identifikationen oder Identifikationsteile, zuhanden einer Statistik-Funktion auslesen.

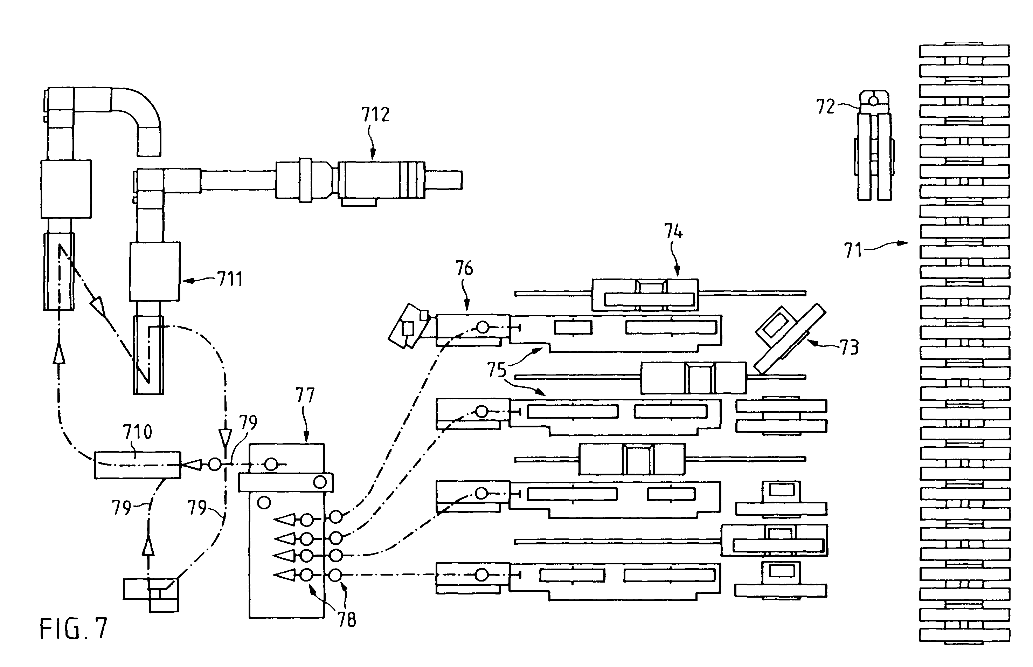

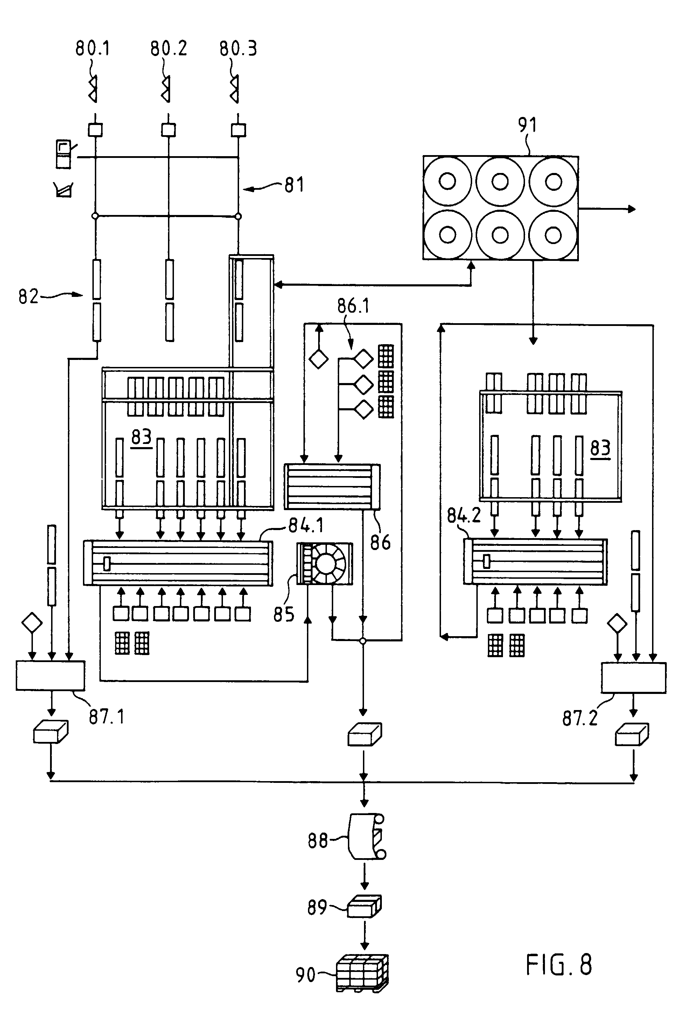

**Figuren 7 und 8** zeigen noch zwei beispielhafte Anordnungen, in denen Erzeugnisse von Druckmaschinen weiterverarbeitet werden, und die als erfindungsgemässe Verarbeitungssysteme mit zugeordneter Identifikationsstruktur ausgelegt sein können.

**Figur 7** zeigt ein einfacheres System, in das bedruckte Erzeugnisse (Edukte) in Wickel- oder Stapelform zugeführt werden und in dem diese Erzeugnisse zusammengestellt und verpackt werden. Die Systemelemente (in Klammern ist die Funktionsbezeichnung gemäss Figur 1 angefügt) sind die folgenden: Zwischenlager 71 von Wickeln (E/P-SE), Wickeltransportfahrzeug 72 (TV), Vorrichtungen zum automatischen Wickelhandling 73 kooperierend mit Robotfahrzeugen 74 (zusammen VV), Abwickelstationen 75 (VV), Schnellanleger 76 (VV), Sammelhefttrommel 77 mit Überwachungs- und Steuerfunktionen 78 (zusammen VV), Fördersystem 79 (VV), Ausschleusweiche 710 (VV), Trimmer 711 (VV) und Folienverpackungs-Vorrichtung 712 (VV). Derartige Systeme sind an sich bekannt und müssen hier nicht detailliert beschrieben werden.

Eine dem System gemäss Figur 7 zugeordnete, einfache Identifikationsstruktur kann nun beispielsweise die folgenden Funktionen ausüben: beim Eintritt ins System wird an den Wickelkernen, wenn sie noch keinen besitzen, ein Identifikationsträger angebracht. Die Wickelidentifikation wird vom Identifikations-controller auf das System abgestimmt und von einer durch den Verarbeitungscontroller gesteuerten Eingangsprüfung wird die Prozessidentifikation der in das System eintretenden Wickel überprüft oder neu gesetzt. An den Abwickelstationen wird die Prozessidentifikation der Wickel geprüft und nach dem Abwickeln auf Null gesetzt. Dafür weisen die Abwickelstationen Schreib/Lesegeräte auf. Die Prozessidentifikationen der Wickel können auch bereits durch das Transportfahrzeug 72 oder durch die Handlingvorrichtung 73 geprüft werden.

Eine etwas komplexere Identifikation mit einer feineren Aufteilung der Lese- und Schreibrechte, als sie bis anhin beschrieben wurde, für einen Wickelkern in einem System, wie es beispielsweise in der Figur 7 dargestellt ist, soll in den folgenden Abschnitten noch als Beispiel beschrieben werden.

Ein derartiger Wickelkern wird von einem Hersteller hergestellt, an einen Verarbeitungsbetrieb ausgeliefert und von dort beladen mit Druckprodukten gegebenenfalls auch in weitere Verarbeitungsbetriebe weitergeleitet, mit der Absicht, dass er wieder in seinen angestammten Betrieb zurückkehren soll.

Der Hersteller setzt in einem vom Kunden nicht beeinflussbaren Teil der Individuumsidentifikation bereits Typ, Herstelldatum, Versionsnummer, Bandversion, Bandlänge und maximale Anzahl Wickelvorgänge zwischen Revisionen. Ebenfalls vom Hersteller oder vom Kunden werden im Bereiche der Systemidentifikation der Name des Besitzers oder des Verarbeitungsbetriebes gesetzt und eine maximale Zahl für Wickelzyklen in fremden Verarbeitungsbetrieben.

Werden auf den Kern im Verarbeitungsbetrieb Produkte oder Teile von Produkten aufgewickelt, schreibt die Wickelstation Produktname, Format, Seitenzahl, Anzahl der aufgewickelten Produkte, Produktelage, Produktabstand, Produktdicke, Produktgewicht in den Bereich der Prozessidentifikation. Sollen die aufgewickelten Produkte in einem anderen Verarbeitungsbetrieb weiterverarbeitet werden, setzt der Systemcontroller beim Verlassen des eigenen Verarbeitungsbetriebs den weiteren Benützer in den Bereich der Systemidentifikation und einen Zähler für Wickelzyklen auf Null.

Beim Eintreffen des Wickels in dem weiteren Verarbeitungsbetrieb wird bei der Eingangskontrolle die Produkteart, Produktezahl und Absender (Besitzer des Wickelkerns) eingelesen und dem Verarbeitungscontroller zur Vergfügung gestellt. Über diesen erhält der Transportcontroller die Aufgabem den Wickel in ein Pufferlager zu befördern und dort an einen Vorbereitungsständer zu hängen. Die dafür notwendige Manipulation wird gesteuert anhand der Identifikationsdaten betreffend Kerntyp (Breite), Produkteformat, Produkteart.

Für die Verarbeitung der Produkte des beobachteten Wickels wird dieser aus dem Lager entnommen und zu einer Abwickelstation geführt durch Anforderung des Verarbeitungscontrollers an den Transportcontroller. Die Wickelstation überprüft die Identifikation betr. Produkt und es werden Einstellungen vorgenommen anhand der Identifikationen betr. Produkteformat, Produktedikke, Produktelage etc. Während dem Abwickeln werden die Daten betr. Produkteanzahl und Zähler für Wickelzyklen aktiviert. Ist der Wickelkern leer, wird er wieder ins Lager verschoben, wozu erneut die Daten der Identifikation zur Steuerung zugezogen werden. Ist der Stand des Zählers für Wickelzyklen in anderen als dem eigenen Verarbeitungsbetrieb auf dem gleichen Stand wie die entsprechende, zugelassenen Maximalzahl (beispielsweise 1), ist die Identifikation für den fremden Verarbeitungsbetrieb gesperrt (nicht mehr beschreibbar). Ein derartiger Wickelkern wird anhand der Identifikation betr. seines Eigentümers an einem bestimmten Lagerplatz mit anderen derartigen Kernen für einen gemeinsamen Rücktransport gesammelt.

Wenn der Kern in den eigenen Verarbeitungsbetrieb zurückkehrt, wird die Identifikation betr. Zahl der Wickelzyklen seit der letzten Revision mit der vom Hersteller gesetzten entsprechenden Maximalzahl verglichen und der Kern entsprechend dem Resultat des Vergleichs zurück in die Verarbeitung oder dem Unterhalt zugeführt.

Die folgende Tabelle zeigt die Identifikation des beschriebenen Wickelkernes aufgeteilt wiederum in die drei Bereiche Systemidentifikation S, Individuumsidentifikation I und Prozessidentifikation P (IC = Identifikationscontroller, VC = Verarbeitungscontroller).

| Daten | Bereich | Schreibrecht |
|---|---|---|
| Besitzer | S | IC Besitzer oder Hersteller |
| weiterer Benützer | S | IC Besitzer |
| max. Wickelvorgänge (fremd) | S | IC Besitzer |
| Zähler für Wickelzyklen (fremd) | S | IC Besitzer und Wickelstation |
| Typ | I | Hersteller |
| Herstelldatum | I | Hersteller |
| Versionsnummer | I | Hersteller |
| Bandversion | I | Hersteller |
| Bandlänge | I | Hersteller |
| max. Wickelvorgänge (Rev.) | I | Hersteller |
| Zähler Wickelzyklen (Rev.) | I | Wickestation u. Unterhaltsmonteur |
| Produktname | P | Wickelstation oder VC |
| Format | P | Wickelstation oder VC |
| Seitenzähl | P | Wickelstation oder VC |
| Anzahl aufgew. Produkte | P | Wickelstation |
| Produktelage | P | Wickelstation oder VC |
| Produktabstand | P | Wickelstation oder VC |
| Produktdicke | P | Wickelstation oder VC |
| Produktgewicht | P | Wickelstation oder VC |

**Figur 8** zeigt ein komplexeres System ebenfalls zur Weiterverarbeitung von Erzeugnissen aus Druckmaschinen. Das System weist die folgenden Elemente auf: drei Druckmaschinen 80.1 bis 80.3 (VV), Fördersystem 81 (VV) zur kontinuierlichen Förderung der Erzeugnisse von den Druckmaschinen zu drei Aufwickelstationen 82 (VV), zehn Abwickelstationen 83 (VV), zwei Sammelhefttrommeln 84.1 und 84.2 (VV), eine Schneidtrommel 85 (VV), Einstecktrommel 86 (VV), Vorsammelsystem 86.1 (VV), zwei Rotationsschneider 87.1 und 87.2 (VV), Wickellager 91 (E/P-SE) mit das Lager bedienendem Hubstapler (TV, nicht dargestellt), Folieneinschlag-Vorrichtung 88 (VV), Umreifungseinrichtung 89 (VV), Palettierungsplatz 90 zur beispielsweise manuellen Palettierung der Pakete (VV).

Eine dem System gemäss Figur 8 zuzuordnende, einfache Identifikationsstruktur umfasst beispielsweise Identifikationsträger an den Wickelkernen (SE) und an mit erstellten Paketen zu beladenden Paletten (SE) und entsprechende Identifikations-verändemde Mittel an den Aufwickel- und Abwickelstationen (VV) und am Palettierungsplatz 90. Die Identifikationen der Wickelkerne, insbesondere die Prozessidentifikationen, werden überprüft durch Transportmittel zwischen Aufwickelstationen 82, Abwickelstationen 83 und Lager 91. Zusätzliche Lesegeräte können im Lager 91 vorgesehen sein. Die Prozessidentifikationen der Wickel bzw. Wickelkerne werden an den Wickelstationen 82 bzw. 83 verändert.

## Patentansprüche

1. Verarbeitungssystem zur Verarbeitung von zugeführten Edukten zu abzuführenden Produkten, welches Verarbeitungssystem eine Mehrzahl von systemeigenen (VV, UV, TV, VC, TC, UC, SE) und nicht systemeigenen (E/P), aktiven (VV, UV, TV, VC, TC, UC) und passiven (SE, E/P, E/P-SE) Elementen, mindestens einem Teil der aktiven und passiven Elemente zugeordnete aus einer Mehrzahl von Identifikationsteilen (S, I, P) bestehende Identifikationen, mindestens einem Teil der aktiven Elemente (VV, UV, TV, VC, TC, UC) zugeordnete Mittel zur Veränderung von Identifikationsteilen sowie Mittel zum Lesen und Kontrollieren von Identifikationen oder Identifikationsteilen und Mittel zum Steuern von aktiven Elementen (VV, UV, TV, VC, TC, UC) anhand von Identifikationen oder Identifikationsteilen aufweist,
wobei die aktiven Elemente (VV, UV, TV, VC, TC, UC) des Verarbeitungssystems befähigt sind in vorgegebener Weise auf vorgegebene aktive oder passive Elemente (VV, UV, TV, VC, TC, UC, SE, E/P, E/P-SE) zu wirken und die aktiven und passiven Elemente des Verarbeitungssystems zusammen mit den Wirkungsbefähigungen eine funktionelle Struktur des Verarbeitungssystems definieren,
wobei die aktiven Elementen (VV, UV, TV, VC, TC, UC) des Verarbeitungssystems zugeordneten Mittel zur Veränderung von Identifikationsteilen (S, I, P) befähigt sind, vorgegebene Identifikationsteile aktiver und/oder passiver Elemente zu verändern, und die Identifikationen zusammen mit den Veränderungsbefähigungen eine Identifikationsstruktur des Verarbeitungssystems definieren,
wobei die Identifikationsstruktur mindestens teilweise die funktionelle Struktur abbildet dadurch, dass jede Veränderungsbefähigung eines aktiven Elementes (VV, UV, TV, VC, TC, UC) einer Wirkbefähigung desselben Elementes entspricht und in der Identifikation jedes Elementes auf das die genannte Wirkbefähigung gerichtet ist, ein Identifikationsteil (S, I, P) vorgesehen ist, der durch die entsprechende Veränderungsbefähigung veränderbar ist,
wobei zusätzlich mindestens einem Teil der aktiven Elemente (VV, UV, TV, VC, TC, UC) zugeordnete Mittel zur Identifikations-veränderung befähigt sind, eigene Identifikationsteile (I) zu verändern,
und wobei zusätzlich jede Identifikation einen Identifikationsteil (S) aufweist, der durch einen dem ganzen System zugeordneten Identifikations-Controller (IC) veränderbar ist.

2. Verarbeitungssystem nach Anspruch 1, wobei nicht systemeigenen Elementen (E/P) keine Identifikation zugeordnet ist und systemeigene passive Elemente (SE, E/P-SE) vorgesehen sind, deren Identifikation einen Identifikationsteil aufweist, der nicht systemeigene Elemente betrifft.

3. Verarbeitungssystem nach einem der Ansprüche 1 oder 2, wobei die Identifikationen von Elementen zusätzlich zur durch den Identifikations-Controller veränderbaren Systemidentifikation (S) mindestens zwei weitere Teile (I, P) aufweisen: eine Individuumsidentifikation (I), die das Element betrifft, und eine Prozessidentifikation (P), die einen Prozess betrifft, an dem das Element momentan beteiligt ist, wobei die Individuumsidentifikation durch das Element selbst oder durch andere Elemente veränderbar ist und die Prozessidentifikation durch andere Elemente veränderbar ist.

4. Verarbeitungssystem nach Anspruch 3, wobei im Unterhalt aktive Elemente zur Veränderung der Individuumsidentifikation (I) von aktiven und passiven Elementen befähigt sind.

5. Verarbeitungssystem nach einem der Ansprüche 1 bis 4, wobei die passiven, systemeigenen Elemente Wickelkerne oder Wickelkassetten bzw. Paletten oder Behälter sind und als aktive, systemeigene Elemente Vorrichtungen zum Auf-/Abwickeln bzw. Vorrichtungen oder Personal zum Palettieren oder Beschicken von Behältern vorgesehen sind.

6. Verarbeitungssystem nach einem der Ansprüche 1 bis 5, wobei als Identifikationsträger elektronische Speicher und als Identifikations-verändernde Mittel elektronische Lese/Schreibvorrichtungen vorgesehen sind.

7. Verarbeitungssystem nach Anspruch 6, wobei Elemente die Identifikation in Form eines Chips tragen, welcher Chip neben dem Speicher auch Sicherheitsfunktionen zur Verhinderung von unrechtmässigem Überschreiben aufweist.

8. Verarbeitungssystem nach Anspruch 6 oder 7, wobei zur berührungslosen Interaktion zwischen Identifikationsträger und Identifikations-veränderndem Mittel eine Spulenanordnung zur Übertragung von Energie und Daten vorgesehen ist.

## Claims

1. Processing system for processing supplied educts to products to be removed, the system having a plurality of system-inherent (VV, UV, TV, VC, TC, UC, SE) and non system-inherent (E/P), active (VV, UV, TV, VC, TC, UC) and passive (SE, E/P, E/P-SE) elements, identifications associated to at least part of the active and passive elements consisting of a plurality of identification parts (S, I, P), means for changing identification parts associated to at least part of the active elements (VV, UV, TV, VC, TC, UC) as well as means for reading and monitoring of identifications or identification parts and means for controlling of active elements (VV, UV, TV, VC, TC, UC) by means of identifications or identification parts,
whereby the active elements (VV, UV, TV, VC, TC, UC) of the processing system are capable of acting on active or passive elements (VV, UV, TV, VC, TC, UC; SE, E/P, E/P-SE) in predetermined manner and the active and passive elements of the processing system define a functional structure of the processing system together with the capacities to act on other elements,
whereby the means for changing the identification parts (S, I, P) associated with the active elements (VV, UV, TV, VC, TC, UC) of the processing system are capable of changing predetermined identification parts of active and/or passive elements and the identifications define an identification structure of the processing system together with the capacities to vary,
whereby the identification structure at least partly shows a functional structure in that for each capacity to vary an active element (VV, UV, TV, VC, TC, UC ) corresponds to a capacity of the same element to act and in the identification of each element at which said capacity to act is directed an identification part (S, I, P) is provided which is variable by means of the corresponding capacity to vary,
whereby means associated with at least one part of the active means (VV, UV, TV, VC, TC, UC) for identification-varying are capable of changing own identification parts (I),
and whereby additionally each identification comprises an identification part (S) which is variable by means of an identification-controller (IC) associated with the whole system.

2. Processing system according to claim 1, whereby no identification is associated with non-system-inherent elements (E/P) and that system-inherent passive elements (SE, E/P-SE) are provided, whose identification incorporates the identification of non-system-inherent elements.

3. Processing system according to one of claims 1 or 2, whereby the identifications of elements variable by means of the identification controller additionally comprise at least two further parts (I, P): an individual identification (I) which concerns the element and a process identification (P) which concerns a process in which the element is momentarily participating, whereby the individual identification is variable by the element itself or by other elements and the process identification is variable by means of other elements.

4. Processing system according to claim 3, whereby for maintenance active elements are capable of varying the individual identification (I) of active and passive elements.

5. Processing system according to one of claims 1 to 4, whereby the passive system-inherent elements are winding cores or cassettes, or pallets or containers respectively and that the active, system-inherent elements are winding/unwinding devices or devices or personnel for palletizing or loading containers respectively.

6. Processing system according to one of claims 1 to 5, whereby the identification carriers are electronic memories and the identification-varying means electronic reading/writing devices.

7. Processing system according to claim 6, whereby the elements carry the identification in form of a chip which, apart from the memory also has a security function for illicit overwriting.

8. Processing method according to claim 6 or 7, whereby for the contactless interaction between identification carriers and identification-varying means a coil arrangement is provided for the transmission of power and data.

## Revendications

1. Système de traitement pour la transformation d'intrants amenés en produits à évacuer, présentant une pluralité d'éléments propres au système (VV, UV, TV, VC, TC, UC, SE) et non propres au système (E/P), actifs (VV, UV, TV, VC, TC, UC) et passifs (SE, E/P, E/P-SE), des identifiants associés à une partie au moins des éléments actifs et passifs et composés d'une pluralité de parties d'identifiant (S, I, P), des moyens associés à une partie au moins des éléments actifs (VV, UV, TV, VC, TC, UC) pour modifier les parties d'identifiant, ainsi que des moyens pour lire et contrôler des identifiants ou des parties d'identifiants et des moyens pour commander des éléments actifs (VV, UV, TV, VC, TC, UC) à partir d'identifiants ou de parties d'identifiants,
dans lequel les éléments actifs (VV, UV, TV, VC, TC, UC) du système de traitement sont capables d'agir de manière prédéterminée sur des éléments actifs ou passifs (VV, UV, TV, VC, TC, UC, SE, E/P, E/P-SE) prédéterminés et les éléments actifs et passifs du système de traitement définissent, avec les capacités d'action, une structure fonctionnelle du système de traitement,
dans lequel les moyens de modification des parties d'identifiant (S, I, P) associés aux éléments actifs (VV, UV, TV, VC, TC, UC) du système de traitement peuvent modifier des parties d'identifiant prédéterminées d'éléments actifs et/ou passifs, et les identifiants définissent avec les capacités de modification une structure d'identification du système de traitement,
dans lequel la structure d'identification représente au moins partiellement la structure fonctionnelle par le fait que chaque capacité de modification d'un élément actif (VV, UV, TV, VC, TC, UC) correspond à une capacité d'action de ce même élément et qu'il est prévu dans l'identifiant de chaque élément concerné par ladite capacité d'action une partie d'identifiant (S, I, P) qui peut être modifiée par la capacité de modification correspondante,
dans lequel des moyens de modification de l'identification associés à une partie au moins des éléments actifs (VV, UV, TV, VC, TC, UC) peuvent en outre modifier des parties d'identifiant propres (I),
et dans lequel chaque identifiant présente en outre une partie d'identifiant (S) qui peut être modifiée par un contrôleur d'identification (IC) associé à l'ensemble du système.

2. Système de traitement selon la revendication 1, caractérisé en ce qu'aucun identifiant n'est associé aux éléments non propres au système (E/P) et en ce qu'il est prévu des éléments passifs propres au système (SE, E/P-SE) dont l'identifiant présente une partie d'identifiant qui concerne les éléments non propres au système.

3. Système de traitement selon l'une quelconque des revendications 1 ou 2, caractérisé en ce que les identifiants des éléments présentent, outre l'identifiant du système (S) modifiable par le contrôleur d'identification, au moins deux autres parties (I, P) : un identifiant de l'individu (I) concernant l'élément, et un identifiant de processus (P) concernant un processus auquel l'élément participe à un moment donné, l'identifiant d'individu pouvant être modifié par l'élément lui-même ou par d'autres éléments et l'identifiant de processus pouvant être modifié par d'autres éléments.

4. Système de traitement selon la revendication 3, caractérisé en ce que des éléments actifs dans le cadre de l'entretien sont capables de modifier l'identifiant de l'individu (I) des éléments actifs et passifs.

5. Système de traitement selon l'une ou l'ensemble des revendications 1 à 4, caractérisé en ce que les éléments passifs propres au système sont des noyaux d'enroulement ou des cassettes d'enroulement ou des cassettes ou récipients et les éléments actifs propres au système comprennent des dispositifs d'enroulement et de dévidage ou des dispositifs ou du personnel assurant la palettisation ou le remplissage de récipients.

6. Système de traitement selon l'une ou l'ensemble des revendications 1 à 5, caractérisé en ce que les supports d'identification sont des mémoires électroniques et que les moyens modifiant l'identification sont des dispositifs électroniques de lecture-écriture.

7. Système de traitement selon la revendication 6, caractérisé en ce que les éléments portent l'identifiant sous la forme d'une puce qui comporte, outre la mémoire, des fonctions de sécurité empêchant une réécriture illicite.

8. Système de traitement selon la revendication 6 ou 7, caractérisé en ce qu'en vue de l'interaction sans contact entre le support d'identification et les moyens modifiant l'identification, il est prévu une disposition de bobines destinée à la transmission d'énergie et de données.
